# EUROPEAN PATENT SPECIFICATION

(11) **EP 1 873 752 B1**
(45) Date of publication and mention of the grant of the patent: **23.09.2009**
(21) Application number: 06023610.6
(22) Date of filing: 14.11.2006
(51) Int. Cl.: G10L 13/04, G10L 13/02, G06F 17/21

(54) **Mobile communication terminal and text-to-speech method**
Sprachsyntheseverfahren integriert in einem mobilen Endgerät
Procédé de synthèse de la parole dans un terminal mobile de communication

(30) Priority: 30.06.2006 KR 20060060232
(43) Date of publication of application: 02.01.2008
(73) Proprietor: Samsung Electronics Co., Ltd., Suwon-si, Gyeonggi-Do (KR)
(72) Inventor: Lee, Yong Seok, Gyeonggi-do (KR)
(74) Representative: Boakes, Jason Carrington

(56) References cited:
- EP-A- 1 431 958
- GB-A- 2 388 286
- US-A1- 5 899 975
- SHAJAHAN P ET AL: "Representing hierarchies using multiple synthetic voices" INFORMATION VISUALISATION, 2004. IV 2004. PROCEEDINGS. EIGHTH INTERNATIONAL CONFERENCE ON LONDON, ENGLAND 14-16 JULY 2004, PISCATAWAY, NJ, USA,IEEE, 14 July 2004 (2004-07-14), pages 885-890, XP010713707 ISBN: 0-7695-2177-0
- FROST R A: "Speechnet: a network of hyperlinked speech-accessible objects" ADVANCE ISSUES OF E-COMMERCE AND WEB-BASED INFORMATION SYSTEMS, WECWIS, 1999. INTERNATIONAL CONFERENCE ON SANTA CLARA, CA, USA 8-9 APRIL 1999, PISCATAWAY, NJ, USA,IEEE, US, 8 April 1999 (1999-04-08), pages 116-121, XP010348789 ISBN: 0-7695-0334-9

## Description

### BACKGROUND OF THE INVENTION

### Field of the Invention

The present invention relates generally to a mobile communication terminal having a text-to-speech function and, more particularly, to a mobile communication terminal and method for producing different speech sounds for different screen objects.

### Description of the Related Art

A portable terminal is a terminal that can be carried with a person and is capable of supporting wireless communication. A mobile communication terminal, Personal Digital Assistant (PDA), smart phone, and International Mobile Telecommunications-2000 (IMT-2000) terminal are examples of such a portable terminal. The following descriptions are focused on a mobile communication terminal.

With advances in communication technologies, a user in motion can readily carry a mobile communication terminal and send and receive calls at most times and places. In addition to conventional phone call processing, an advanced mobile communication terminal supports various functions such as text message transmission, schedule management, Internet access, etc.

When a user accesses the Internet for an information search with their mobile communication terminal, searched textual information is displayed on a screen of the mobile communication terminal. However, the user must look at the screen until the user finishes reading the textual information.

Further, owing to a small picture size of the screen, the user may experience difficulty in reading textual information on the screen.

A text-to-speech (TTS) function, which takes text as input and produces speech sounds as output, may help to solve this problem. For example, in a mobile communication terminal, the TTS function can be used to produce speech sounds from a received text message, an audible signal corresponding to the current time, and audible signals corresponding to individual characters and symbols.

However, a conventional TTS function for a mobile communication terminal produces speech sounds using the same voice at all times. Consequently, it may be difficult to distinguish display states of the mobile communication terminal based on the TTS output.

US-A-5899975 discloses the control, using a style sheet, of the presentation of audio information, particularly audio information generated by a voice synthesizer from text using a text or screen reader. The style sheet permits default presentation styles, such as voice-family, voice-pitch, voice-variant, voice speed and volume to be set, and then varied based on embedded text presentation commands such as those found in hypertext markup language and in desktop publishing.

### SUMMARY OF THE INVENTION

The present invention has been made in view of the above problems, and an object of the present invention is to provide a mobile communication terminal and text-to-speech method that produce different speech sounds corresponding to individual display situations.

Another object of the present invention is to provide a mobile communication terminal and text-to-speech method that produce different speech sounds corresponding to depths of screen objects.

In accordance with the present invention, there is provided a mobile communication terminal capable of text-to-speech synthesis, the terminal being as defined by claim 1.

In accordance with the present invention, there is also provided a text-to-speech method for a mobile communication terminal, the method being as defined by claim 10.

In a feature of the present invention, textual contents of different objects are output in different voices according to depths of the objects. For example, when two pop-up windows are displayed on a screen in an overlapping manner, textual contents of the pop-up windows are output in different voices so the user can easily distinguish one pop-up window from the other pop-up window.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a mobile communication terminal according to the present invention;
FIG. 2 is a flow chart illustrating steps of a text-to-speech method according to the present invention;
FIG. 3 is a flow chart illustrating a step in the method of FIG. 2 of identifying the depth of an object;
FIGS. 4A to 4C illustrate speech data mapping tables of the method of FIG. 2; and FIGS. 5A to 5C illustrate display screen representations of outputs of the method of FIG. 2.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Some constructions or processes known in the art may be not described to avoid obscuring the invention in unnecessary detail.

In the description, the term 'object' refers to a window displayed on a screen, such as a pop-up menu, pop-up notice and message edit window, unless the context dictates otherwise.

The term 'depth' is used to decide which object should be hidden when objects overlap. For example, if two objects overlap, an object of a greater depth (for example, depth '2') is drawn on top of another object of a lesser depth (for example, depth '1').

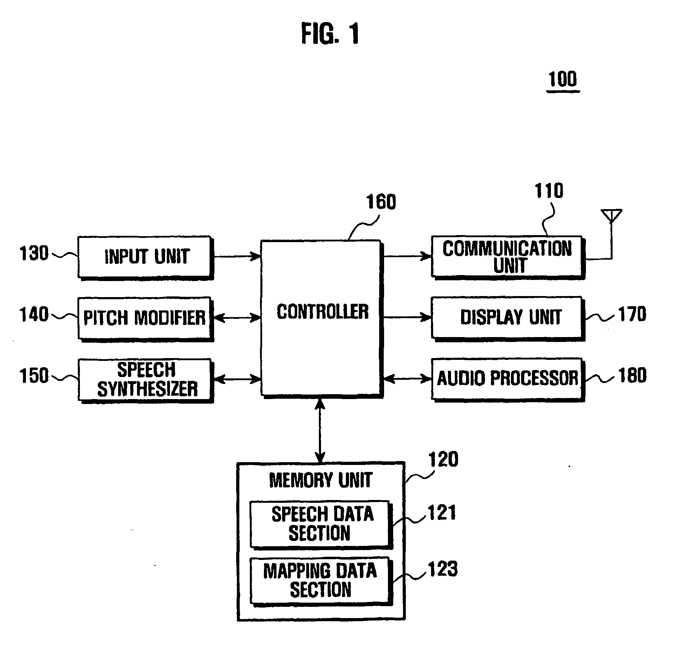

FIG. 1 shows a mobile communication terminal according to the present invention. The mobile communication terminal 100 includes a communication unit 110, a memory unit 120, an input unit 130, a pitch modifier 140, a speech synthesizer 150, a controller 160, a display unit 170, and an audio processor 180.

The communication unit 110, for a sending function, converts data to be transmitted into a radio frequency (RF) signal and transmits the RF signal through an antenna to a corresponding base station. The communication unit 110, for a receiving function, receives an RF signal carrying data through the antenna from a corresponding base station, converts the RF signal into an intermediate frequency (IF) signal, and outputs the IF signal to the controller 160. The transmitted or received data may include voice data, image data, and various message data such as a Short Message Service message, Multimedia Message Service message and Long Message Service message.

The memory unit 120 stores programs and related data for the operation of the mobile terminal 100 and for the control operation of the controller 160, and may be composed of various memory devices such as an Erasable Programmable Read Only Memory, Static Random Access Memory, flash memory, etc. In particular, the memory unit 120 includes a speech data section 121 for storing at least one base speech data set, and a mapping data section 123 for storing information regarding mappings between depths of objects and speech data sets. Speech data sets may be pre-installed in the mobile communication terminal 100 during the manufacturing process before shipment, or be downloaded from a web server according to user preferences.

The pitch modifier 140 performs pitch modification as needed under normal operating conditions. The memory unit 120 may store either one base speech data set or multiple base speech data sets corresponding to, for example, male, female and baby voices.

When dynamic pitch modification in operation is not possible due to performance degradation, pitch-modified speech data sets stored in the memory unit 120 may be used. For example, the memory unit 120 stores multiple modified speech data sets that are pitch-modified from the base speech data set under the control of the pitch modifier 140. The memory unit 120 also stores information regarding mappings between depths of objects and pitch-modified speech data sets, in which the depths of objects are mapped to the pitch-modified speech data sets in a one-to-one manner, preferably according to a user selection.

If multiple speech data sets (for example, a male speech data set, female speech data set and baby speech data set) are available, the memory unit 120 stores information regarding mappings between the depths of objects and the available speech data sets, in which the depths of objects are mapped to the speech data sets in a one-to-one manner, preferably according to a user selection.

The input unit 130 may include various devices such as a keypad and touch screen, and is used by the user to select a desired function or to input desired information. In particular, the input unit 130 inputs object addition and removal commands from the user. For example, during display of a text message on the display unit 170, if the user inputs an object addition command (for example, a menu selection command), the display unit 170 displays a corresponding list of selectable menu items on top of the text message in an overlapping manner.

The pitch modifier 140 applies pitch modification to the base speech data set stored in the memory unit 120, and creates a plurality of pitch-modified speech data sets. The pitch modifier 140 may also pitch-modify speech data that is recorded from calls in progress and stored in the memory unit 120 into pitch-modified speech data sets. Preferably, the pitch-modified speech data sets are stored in the speech data section 121.

The speech synthesizer 150 reads textual information stored in the mobile communication terminal 100, and produces speech sounds using a speech data set stored in the memory unit 120. Text-to-speech (TTS) synthesis is known in the art, and a detailed description thereof is omitted.

The controller 160 controls overall operation and states of the mobile communication terminal 100, and may include a microprocessor or digital signal processor. In particular, the controller 160 controls the display unit 170 to identify the depth of an activated object displayed on the screen, and finds a speech data set mapped to the identified depth of the activated object through the mapping data section 123.

In response to a command of object addition or removal input from the input unit 130, the controller 160 controls the display unit 170 to identify the depth of a newly activated object, and newly finds a speech data set mapped to the identified depth.

When an activated object is determined to include an attached file, the controller 160 treats the attached file as an independent object, and obtains information on the attached file (for example, a file name). The controller 160 then identifies the depths of the activated object and attached file, and finds speech data sets mapped respectively to the identified depths.

Thereafter, the controller 160 controls the speech synthesizer 150 to convert textual contents of the activated object into audio wave data using a speech data set associated with the object, and to output the audio wave data in the form of an audible signal through the audio processor 180. When the attached file is selected and activated, textual contents of the attached file are also converted into audio wave data using an associated speech data set and fed to the audio processor 180 for output in the form of an audible signal.

In response to a request for state information input from the input unit 130, the controller 160 controls the speech synthesizer 150 to convert the requested state information into an audible signal using a preset speech data set, and controls the audio processor 180 to output the audible signal, preferably in a low-tone voice. The speech data set associated with state information can be changed according to a user selection. The state information may be related to at least one of the current time, received signal strength, remaining battery power, and message reception.

The controller 160 periodically checks preset state report times, and controls the audio processor 180 to output information on current states of the mobile communication terminal 100 using a preset speech data set at regular intervals of, preferably, 5 to 10 minutes. The interval between state outputs can be changed according to a user selection.

The display unit 170 displays operation modes and states of the mobile communication terminal 100. In particular, the display unit 170 may display one object on top of another object on the screen in an overlapping manner. For example, during display of a text message, if a menu selection command is input through the input unit 130, the display unit 170 displays a corresponding list of selectable menu items on top of the displayed text message in an overlapping manner.

The audio processor 180 converts audio wave data, which is converted from input textual information by the speech synthesizer 150, preferably using a speech data set associated with the mapping information in the memory unit 120, into an analog speech signal, and outputs the speech signal through a speaker.

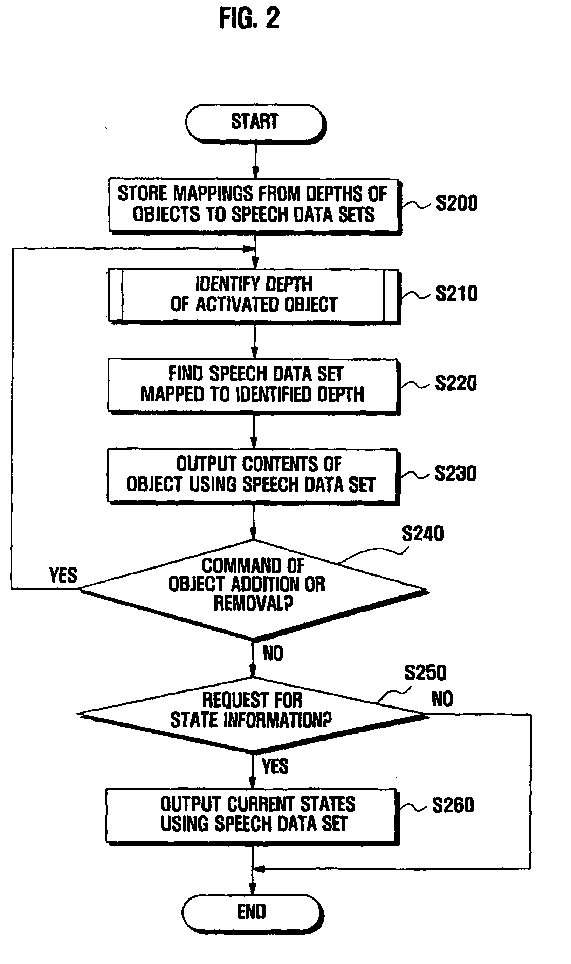

FIG. 2 shows steps of a text-to-speech method according to the present invention. Referring to FIGS. 1 and 2, the method is described below.

The controller 160 stores, in the mapping data section 123, information regarding mappings between depths of objects and speech data sets stored in the speech data section 121, according to user selections (S200). Preferably, the depths of objects are mapped to the speech data sets in a one-to-one manner. Preferably, the speech data section 121 stores at least one base speech data set and a plurality of pitch-modified speech data sets generated by the pitch modifier 140.

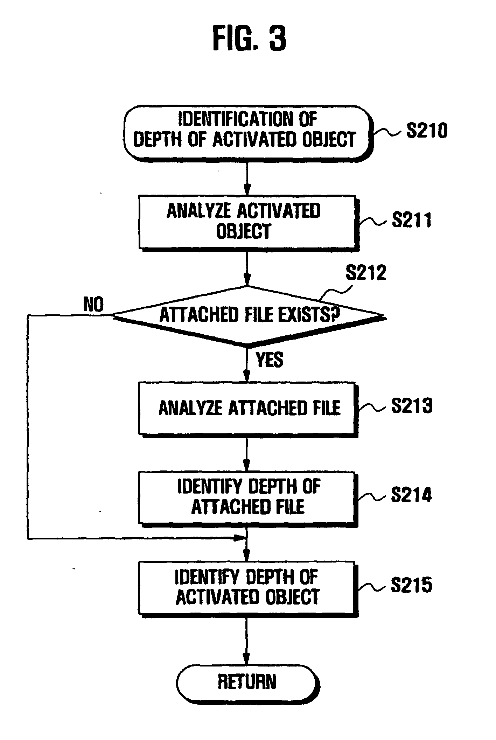

The controller 160 identifies the depth of an activated object on a screen (S210). Step S210 is described later in relation to FIG. 3.

The controller 160 finds a speech data set mapped to the identified depth using the mapping information in the mapping data section 123 (S220). The controller 160 controls the speech synthesizer 150 to produce audio wave data corresponding to textual contents of the activated object using the found speech data set, and controls the audio processor 180 to output the generated audio wave data as an audible signal (S230). The controller 160 determines whether a command of object addition or removal is input through the input unit 130 (S240). If a command of object addition or removal is input, the controller 160 returns to step S210 and repeats steps S210 to S230 to process a newly activated object on the screen.

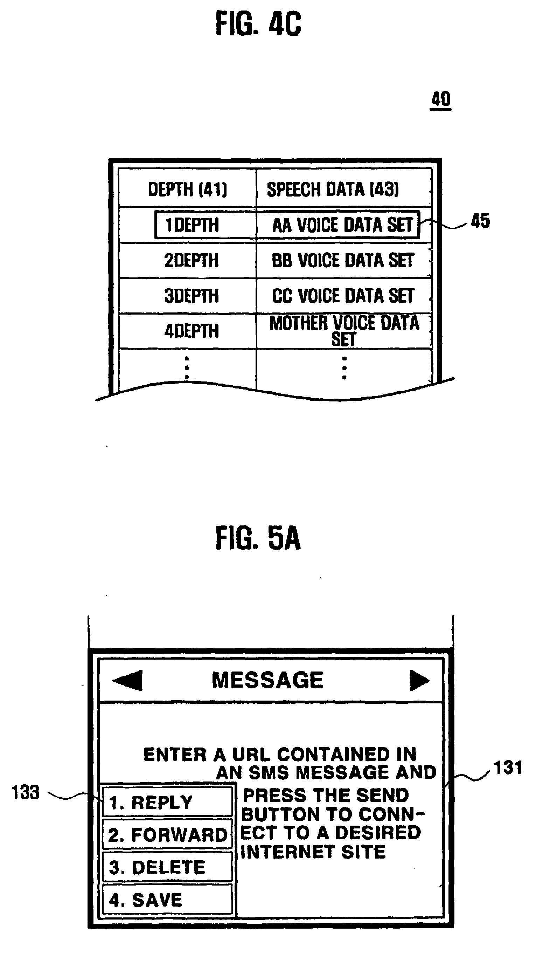

For example, referring to the display screen representation in FIG. 5A, the controller 160 finds a speech data set mapped to the depth of an activated text message 131, controls the speech synthesizer 150 to generate audio wave data corresponding to textual contents of the text message 131 using the found speech data set, and controls output of the generated audio wave data through the audio processor 180. Thereafter, in response to an object addition command, the controller 160 displays a list of menu items 133, generates audio wave data corresponding to the list of menu items 133 (for example, 'reply', 'forward', 'delete', 'save') using a speech data set mapped to the depth of the list of menu items 133, and outputs the generated audio wave data as an audible signal. Because the list of menu items 133 and the text message 131 are different objects, their contents are preferably output in different voices.

If no command of object addition or removal is determined to be input at step S240, the controller 160 determines whether a request for state information is input (S250). If a request for state information is input, the controller 160 controls the speech synthesizer 150 to convert current state information of the mobile communication terminal 100 into an audible signal using a preset speech data set, and controls the audio processor 180 to output the audible signal (S260). The state information may be related to at least one of the current time, received signal strength, remaining battery power, and message reception. Further, the controller 160 periodically checks state report times (preferably, around every five to ten minutes) preset by the user. At each state report time, the controller 160 controls the speech synthesizer 150 to convert the current state information of the mobile communication terminal 100 into an audible signal using a preset speech data set, and controls the audio processor 180 to output the audible signal.

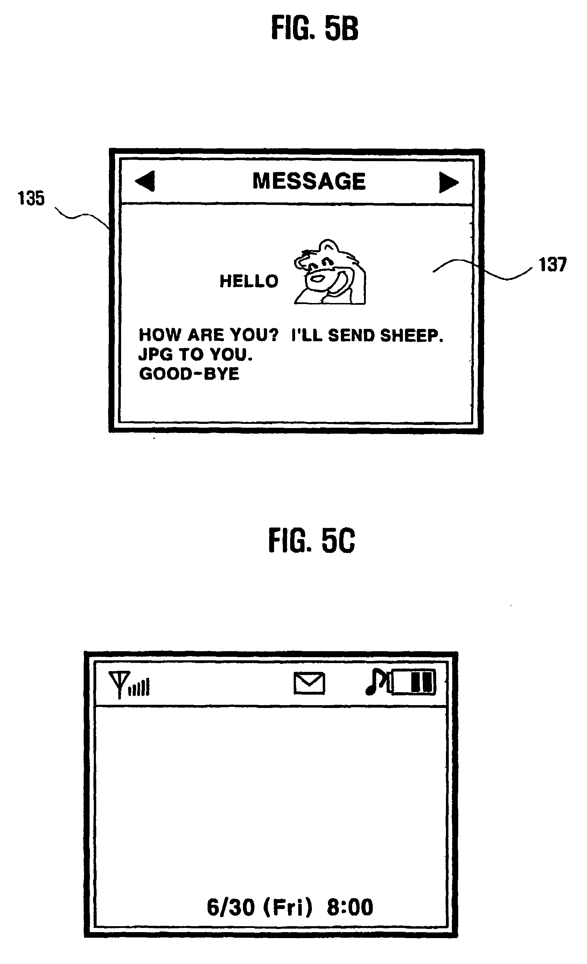

For example, referring to the display screen representation in FIG. 5C, in response to a request for state information input from the user during an idle mode, the controller 160 outputs current states of the mobile communication terminal 100 through the audio processor 180. Preferably, in response to input of a request for state information during any mode, the controller 160 converts current states into an audible signal through the speech synthesizer 150 using a preset speech data set, and outputs the audible signal through the audio processor 180.

FIG. 3 shows the step (step S210 in FIG. 2) of identifying the depth of an activated object. Referring to FIGS. 1 and 3, the step is described below.

The controller 160 analyzes the activated object in step S211 and determines whether a file is attached to the activated object in step S212. If a file is attached, the controller 160 treats the attached file as an independent object and analyzes the attached file in step S213, and identifies the depth of the attached file in step S214.

Thereafter, the controller 160 identifies the depth of the activated object in step S215.

For example, referring to the display screen representation in FIG. 5B, during display of a received message 135 in response to a user selection, the controller 160 analyzes the message 135 and detects an attached file 137. The attached file 137 is treated as an independent object, and the controller 160 obtains information on the attached file 137 (for example, file name). The controller 160 identifies the depths of the message 135 and attached file 137. Thereafter, the controller 160 finds speech data sets mapped respectively to the identified depths, and controls the speech synthesizer 150 to generate audio wave data corresponding to textual contents of the displayed message 135 using the found speech data set, and also controls output of the generated audio wave data through the audio processor 180. Further, when the attached file 137 is selected by the user and activated, the controller 160 generates audio wave data corresponding to textual contents of the attached file 137 using a speech data set mapped to the identified depth, and outputs the generated audio wave data through the audio processor 180. As a result, textual contents of the message 135 and attached file 137 are output in different voices, and the user can easily distinguish the message 135 from the attached file 137.

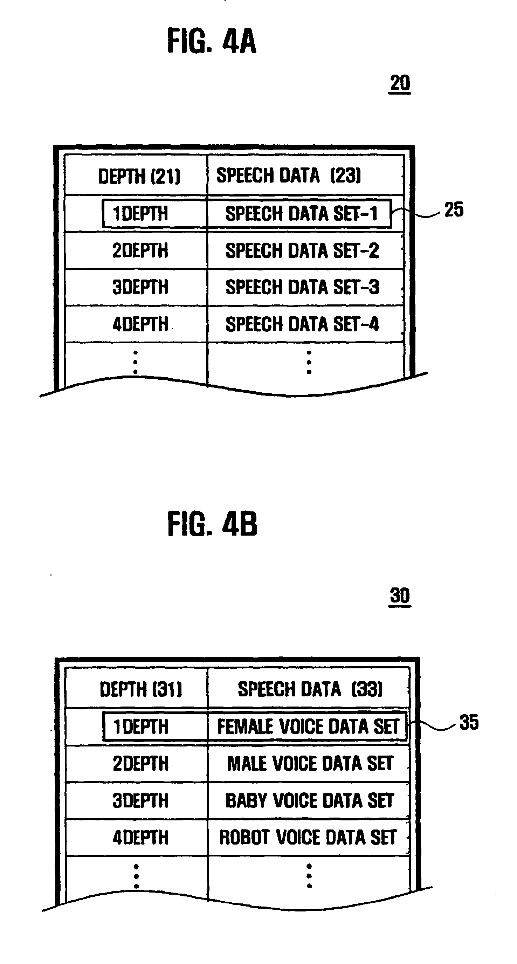

FIGS. 4A and 4C illustrate speech data mapping tables of the method shown in FIG. 2.

Referring to FIG. 4A, a speech data mapping table 20 stored in the mapping data section 123 includes depth fields 21 and speech data fields 23, for storing mappings between depths of objects and speech data sets stored in the speech data section 121. Preferably, the depths of objects are mapped to the speech data sets in a one-to-one manner according to a user selection. Preferably, the speech data section 121 stores a plurality of pitch-modified speech data sets created by the pitch modifier 140. For example, when a base speech data set is stored in the speech data section 121, a plurality of pitch-modified speech data sets can be created by application of pitch modification to the base speech data set. In the speech data mapping table 20, object depths '1', '2' and '3' are mapped to pitch-modified speech data sets 'speech data set-1', 'speech data set-2' and 'speech data set-3', respectively.

Referring to FIG. 4B, a speech data mapping table 30 stored in the mapping data section 123 includes depth fields 31 and speech data fields 33, for storing mappings between depths of objects and speech data sets stored in the speech data section 121. Preferably, the depths of objects are mapped to the speech data sets in a one-to-one manner according to a user selection. Preferably, the speech data section 121 stores various speech data sets with different voices. The speech data sets may be pre-installed in the mobile communication terminal 100 during the manufacturing process before shipment, or be downloaded from a web server according to user preferences. For example, in the speech data mapping table 30, object depths '1', '2', '3' and '4' are mapped to speech data sets 'female voice data set', 'male voice data set', 'baby voice data set' and 'robot voice data set', respectively.

Referring to FIG. 4C, a speech data mapping table 40 stored in the mapping data section 123 includes depth fields 41 and speech data fields 43, for storing mappings between depths of objects and speech data sets stored in the speech data section 121. Preferably, the depths of objects are mapped to the speech data sets in a one-to-one manner according to a user selection. Preferably, the speech data section 121 stores various speech data sets corresponding to voices of intimate persons who frequently make a phone conversation. For example, in the speech data mapping table 40, object depths '1', '2', '3' and '4' are mapped to speech data sets 'AA voice data set', 'BB voice data set', 'CC voice data set' and 'mother voice data set', respectively.

As apparent from the above description, the present invention provides a mobile communication terminal and text-to-speech method, wherein textual contents of different objects are output in different voices so the user can easily distinguish one object from another object. For example, while contents of a text message are output using a text-to-speech function, if a particular menu is selected by the user and a corresponding list of menu items, such as 'reply', 'retransmit', 'delete' and 'forward', is displayed, the list of menu items is output using the text-to-speech function. The contents of the text message and the list of menu items are output in different voices, informing that the currently activated object is not the text message but the list of menu items.

While preferred embodiments of the present invention have been shown and described in this specification, it will be understood by those skilled in the art that various changes or modifications of the embodiments are possible without departing from the scope of the invention as defined by the appended claims.

## Claims

1. A mobile communication terminal capable of text-to-speech synthesis, the terminal comprising:
a display unit for displaying at least one object on a screen;
an input unit for inputting a command of object addition or removal from a user, and inputting a request for state information;
a controller for identifying a depth of an activated object on the screen and finding a speech data set mapped to the identified depth and controlling in response to a request for state information input through an input unit, output of an audible signal corresponding to current state information of the mobile communication terminal using a preset speech data set, wherein the term depth is used to decide which object should be hidden when objects overlap on the display unit;
a speech synthesizer for converting textual contents of the activated object into audio wave data using the found speech data set; and
an audio processor for outputting the audio wave data in speech sounds.

2. The mobile communication terminal of claim 1, wherein the controller activates, in response to a command of object addition or removal input through the input unit, a newly selected object, identifies the depth of the newly activated object, and finds a speech data set mapped to the identified depth.

3. The mobile communication terminal of claim 1, further comprising a memory unit for storing a plurality of speech data sets and information regarding mappings between depths of objects and the speech data sets.

4. The mobile communication terminal of claim 3, further comprising a pitch modifier for creating a plurality of pitch-modified speech data sets by applying pitch modification to one of the stored speech data sets, and wherein the memory unit stores mapping information in which the depths of objects are mapped to the pitch-modified speech data sets in a one-to-one manner according to a user selection.

5. The mobile communication terminal of claim 3, wherein the memory unit stores mapping information in which the depths of objects are mapped to the stored speech data sets in a one-to-one manner according to a user selection.

6. The mobile communication terminal of claim 1, wherein the controller obtains information on the attached object, and identifies depths of the activated object and the attached object when the activated object includes an attached object.

7. The mobile communication terminal of claim 6, wherein the controller finds speech data sets mapped to the identified depths of the activated and attached objects, and controls output of audible signals corresponding to textual contents of the activated and attached objects using corresponding mapped speech data sets.

8. The mobile communication terminal of claim 1, wherein the state information is related to at least one of the current time, received signal strength, remaining battery power, and message reception.

9. The mobile communication terminal of claim 1, wherein the controller periodically checks preset state report times, and, at each state report time, controls output of an audible signal corresponding to the current state information of the mobile communication terminal using the preset speech data set.

10. A text-to-speech method for a mobile communication terminal that is capable of displaying multiple objects on a screen in an overlapping manner, the method comprising:
identifying a depth of an activated object on the screen, wherein the term depth is used to decide which object should be hidden when objects overlap on the display unit;
finding a speech data set mapped to the identified depth;
determining whether command of object addition or removal is input;
outputting an audible signal corresponding to textual contents of the activated object using the found speech data set, if command of object addition or removal is input;
outputting, in response to input of a request for state information, an audible signal corresponding to current state information of the mobile communication terminal using a preset speech data set.

11. The text-to-speech method of claim 10, further comprising identifying the depth of a newly activated object, and finding a speech data set mapped to the identified depth when the activated object is replaced in response to input of a command of object addition or removal.

12. The text-to-speech method of claim 10, further comprising storing a plurality of speech data sets and information regarding mappings between depths of objects and the speech data sets.

13. The text-to-speech method of claim 12, further comprising creating a plurality of pitch-modified speech data sets by applying pitch modification to one of the stored speech data sets, and wherein the storing information regarding mappings step stores mapping information in which the depths of objects are mapped to the pitch-modified speech data sets in a one-to-one manner.

14. The text-to-speech method of claim 12, wherein the storing information regarding mappings step stores mapping information in which the depths of objects are mapped to the stored speech data sets in a one-to-one manner.

15. The text-to-speech method of claim 10, wherein the identifying a depth step comprises obtaining information on the attached object, and identifying the depths of the activated object and the attached object when the activated object includes an attached object, and wherein the finding a speech data set step comprises finding speech data sets mapped to identified depths of activated and attached objects, and outputting audible signals corresponding to textual contents of the activated and attached objects using corresponding mapped speech data sets.

16. The text-to-speech method of claim 10, wherein the state information is related to at least one of the current time, received signal strength, remaining battery power, and message reception.

17. The text-to-speech method of claim 10, wherein the outputting an audible signal corresponding to current state information step comprises periodically checking preset state report times, and outputting an audible signal corresponding to the current state information of the mobile communication terminal using the preset speech data set at each state report time.

## Patentansprüche

1. Mobiles Kommunikationsendgerät mit Sprachsynthese-(Text-to-Speech)-Fähigkeit, wobei das Endgerät Folgendes umfasst:
eine Anzeigeeinheit zum Anzeigen von wenigstens einem Objekt auf einem Bildschirm;
eine Eingabeeinheit zum Eingeben eines Objekthinzufügungs- oder -wegnahmebefehls von einem Nutzer und zum Eingeben einer Anforderung von Zustandsinformationen;
eine Steuerung zum Identifizieren einer Tiefe eines aktivierten Objekts auf dem Bildschirm und zum Suchen eines Sprachdatensatzes, abgebildet auf die identifizierte Tiefe, und zum Steuern, als Reaktion auf eine durch eine Eingabeeinheit eingegebene Anforderung von Zustandsinformationen, des Ausgangs eines hörbaren Signals, das den aktuellen Zustandsinformationen des mobilen Kommunikationsendgerätes mit dem voreingestellten Sprachdatensatz entspricht, wobei der Begriff Tiefe verwendet wird, um zu entscheiden, welches Objekt überlagert werden soll, wenn sich Objekte auf der Anzeigeeinheit überlappen;
einen Sprachsynthesizer zum Umwandeln von Textinhalten des aktivierten Objekts in Audiowellendaten unter Verwendung des gefundenen Sprachdatensatzes; und
einen Audioprozessor zum Ausgeben der Audiowellendaten in Sprachtönen.

2. Mobiles Kommunikationsendgerät nach Anspruch 1, wobei die Steuerung als Reaktion auf einen durch die Eingabeeinheit eingegebenen Objekthinzufügungs- oder -wegnahmebefehl ein neu gewähltes Objekt aktiviert, die Tiefe des neu aktivierten Objektes identifiziert und einen auf die identifizierte Tiefe abgebildeten Sprachdatensatz sucht.

3. Mobiles Kommunikationsendgerät nach Anspruch 1, das ferner eine Speichereinheit zum Speichern mehrerer Sprachdatensätze und Informationen über Abbildungen zwischen Tiefen von Objekten und den Sprachdatensätzen umfasst.

4. Mobiles Kommunikationsendgerät nach Anspruch 3, das ferner einen Tonhöhenmodifizierer zum Erzeugen mehrerer tonhöhenmodifizierter Sprachdatensätze durch Anwenden von Tonhöhenmodifikation auf einen der gespeicherten Sprachdatensätze umfasst, und wobei die Speichereinheit Abbildungsinformationen speichert, in denen die Tiefen von Objekten auf die tonhöhenmodifizierten Sprachdatensätze eins zu eins gemäß einer Nutzerauswahl abgebildet werden.

5. Mobiles Kommunikationsendgerät nach Anspruch 3, wobei die Speichereinheit Abbildungsinformationen speichert, in denen die Tiefen von Objekten auf die gespeicherten Sprachdatensätze eins zu eins gemäß einer Nutzerauswahl abgebildet werden.

6. Mobiles Kommunikationsendgerät nach Anspruch 1, wobei die Steuerung Informationen über das anhängende Objekt einholt und Tiefen des aktivierten Objekts und des anhängenden Objekts identifiziert, wenn das aktivierte Objekt ein anhängendes Objekt beinhaltet.

7. Mobiles Kommunikationsendgerät nach Anspruch 6, wobei die Steuerung auf die identifizierten Tiefen der aktivierten und anhängenden Objekte abgebildete Sprachdatensätze sucht und den Ausgang von hörbaren Signalen, die Textinhalten der aktivierten und anhängenden Objekten entsprechen, unter Verwendung der entsprechenden abgebildeten Sprachdatensätze steuert.

8. Mobiles Kommunikationsendgerät nach Anspruch 1, wobei sich die Zustandsinformationen auf die aktuelle Zeit und/oder die Empfangssignalstärke und/oder die Batterierestleistung und/oder den Nachrichtenempfang beziehen.

9. Mobiles Kommunikationsendgerät nach Anspruch 1, wobei die Steuerung periodisch die voreingestellten Zustandsmeldezeiten prüft und zu jeder Zustandsmeldezeit die Ausgabe eines hörbaren Signals, das den aktuellen Zustandsinformationen des mobilen Kommunikationsendgerätes entspricht, unter Verwendung des voreingestellten Sprachdatensatzes steuert.

10. Sprachsyntheseverfahren für ein mobiles Kommunikationsendgerät, das mehrere Objekte auf einem Bildschirm auf eine überlappende Weise anzeigen kann, wobei das Verfahren die folgenden Schritte beinhaltet:
Identifizieren einer Tiefe eines aktivierten Objekts auf dem Bildschirm, wobei der Begriff Tiefe verwendet wird, um zu entscheiden, welches Objekt überlagert werden soll, wenn sich Objekte auf der Anzeigeeinheit überlappen;
Suchen eines auf die identifizierte Tiefe abgebildeten Sprachdatensatzes;
Ermitteln, ob ein Objekthinzufügungs- oder -wegnahmebefehl eingegeben wird;
Ausgeben eines hörbaren Signals, das Textinhalten des aktivierten Objekts enspricht, unter Verwendung des gefundenen Sprachdatensatzes, wenn ein Objekthinzufiigungs- oder -wegnahmebefehl eingegeben wird;
Ausgeben, als Reaktion auf die Eingabe einer Anforderung von Zustandsinformationen, eines hörbaren Signals, das aktuellen Zustandsinformationen des mobilen Kommunikationsendgerätes enspricht, unter Verwendung eines voreingestellten Sprachdatensatzes.

11. Sprachsyntheseverfahren nach Anspruch 10, das ferner das Identifizieren der Tiefe eines neu aktivierten Objekts und das Suchen eines auf die identifizierte Tiefe abgebildeten Sprachdatensatzes beinhaltet, wenn das aktivierte Objekt als Reaktion auf die Eingabe eines Objekthinzufügungs- oder -wegnahmebefehls ersetzt wird.

12. Sprachsyntheseverfahren nach Anspruch 10, das ferner das Speichern mehrerer Sprachdatensätze und Informationen über Abbildungen zwischen Tiefen von Objekten und den Sprachdatensätzen beinhaltet.

13. Sprachsyntheseverfahren nach Anspruch 12, das ferner das Erzeugen mehrerer tonhöhenmodifizierter Sprachdatensätze durch Anwenden einer Tonhöhenmodifikation auf einen der gespeicherten Sprachdatensätze beinhaltet, und wobei der Schritt des Speicherns von Informationen über Abbildungen Abbildungsinformationen speichert, in denen die Tiefen von Objekten auf die tonhöhenmodifizierten Sprachdatensätze eins zu eins abgebildet werden.

14. Sprachsyntheseverfahren nach Anspruch 12, wobei der Schritt des Speicherns von Informationen über Abbildungen Abbildungsinformationen speichert, in denen die Tiefen von Objekten auf die gespeicherten Sprachdatensätze eins zu eins abgebildet werden.

15. Sprachsyntheseverfahren nach Anspruch 10, wobei der Schritt des Identifizierens einer Tiefe das Einholen von Informationen über das anhängende Objekt und das Identifizieren der Tiefen des aktivierten Objekts und des anhängenden Objekts beinhaltet, wenn das aktivierte Objekt ein anhängendes Objekt beinhaltet, und wobei der Schritt des Suchens eines Sprachdatensatzes das Suchen von auf identifizierte Tiefen von aktivierten und anhängenden Objekten abgebildeten Sprachdatensätzen und das Ausgeben von hörbaren Signalen, die Textinhalten der aktivierten und anhängenden Objekte entsprechen, unter Verwendung von entsprechenden abgebildeten Sprachdatensätzen beinhaltet.

16. Sprachsyntheseverfahren nach Anspruch 10, wobei sich die Zustandsinformationen auf die aktuelle Zeit und/oder die Empfangssignalstärke und/oder die Batterierestleistung und/oder auf den Nachrichtenempfang beziehen.

17. Sprachsyntheseverfahren nach Anspruch 10, wobei der Schritt des Ausgebens eines hörbaren Signals, das den aktuellen Zustandsinformationen entspricht, das periodische Prüfen von voreingestellten Zustandsmeldezeiten und das Ausgeben eines hörbaren Signals, das den aktuellen Zustandsinformationen des mobilen Kommunikationsendgerätes entspricht, unter Verwendung des voreingestellten Sprachdatensatzes zu jeder Zustandsmeldezeit beinhaltet.

## Revendications

1. Terminal mobile de communication apte à opérer la synthèse de la parole, le terminal comprenant :
une unité d'affichage pour afficher au moins un objet sur un écran;
une unité de saisie pour saisir une instruction d'adjonction ou de suppression d'un objet au niveau d'un usager, et pour saisir une demande relative à des informations d'état ;
un contrôleur pour identifier une profondeur d'un objet activé sur l'écran et pour rechercher un ensemble de données vocales qui concorde avec la profondeur identifiée et, en réponse à une demande pour des informations d'état introduite par l'intermédiaire d'une unité de saisie, pour piloter la sortie d'un signal audible lequel correspond aux informations d'état actuelles du terminal mobile de communication grâce à l'utilisation d'un ensemble de données vocales prédéfini, cas dans lequel le terme "profondeur" sert à décider lequel des objets devrait être masqué lorsque des objets se chevauchent sur l'unité d'affichage ;
un synthétiseur de parole pour convertir le contenu textuel de l'objet activé en données d'ondes audio grâce à l'utilisation de l'ensemble de données vocales ayant été trouvé ; et
un processeur audio pour fournir les données d'ondes audio sous forme de sons vocaux.

2. Terminal mobile de communication selon la revendication 1, le contrôleur activant un objet nouvellement sélectionné en réponse à la saisie d'une instruction d'adjonction ou de suppression d'un objet ; le contrôleur identifiant la profondeur de l'objet nouvellement activé et recherchant un ensemble de données vocales qui concorde avec la profondeur identifiée.

3. Terminal mobile de communication selon la revendication 1, comprenant en outre une unité mémoire pour stocker une pluralité d'ensembles de données vocales ainsi que des informations au sujet des concordances entre les profondeurs des objets et les ensembles de données vocales.

4. Terminal mobile de communication selon la revendication 3, comprenant en outre un modificateur de tonie afin de créer une pluralité d'ensembles de données vocales modifiés en tonie grâce à l'application d'une modification de tonie à l'un des ensembles de données vocales stockés, et cas dans lequel l'unité mémoire stocke des informations de concordance dans lesquelles les profondeurs des objets sont mises en concordance avec les ensembles de données vocales modifiés en tonie suivant une manière univoque en fonction d'une sélection d'usager.

5. Terminal mobile de communication selon la revendication 3, l'unité mémoire stockant des informations de concordance dans lesquelles les profondeurs des objets sont mises en concordance avec les ensembles de données vocales stockés suivant une manière univoque en fonction d'une sélection d'usager.

6. Terminal mobile de communication selon la revendication 1, le contrôleur obtenant des informations au sujet de l'objet attaché et identifiant les profondeurs de l'objet activé et de l'objet attaché lorsque l'objet activé inclut un objet attaché.

7. Terminal mobile de communication selon la revendication 6, le contrôleur recherchant des ensembles de données vocales qui concordent avec les profondeurs identifiées des objets activés et attachés, et pilotant la sortie de signaux audibles qui correspondent à des contenus textuels des objets activés et attachés grâce à l'utilisation d'ensembles de données vocales correspondants ayant été mis en concordance.

8. Terminal mobile de communication selon la revendication 1, les informations d'état étant liées à l'un au moins des éléments suivants, à savoir : l'heure actuelle, l'intensité du signal reçu, l'énergie de batterie restante et la réception de messages.

9. Terminal mobile de communication selon la revendication 1, le contrôleur vérifiant à intervalles réguliers les horaires préréglés de soumission d'un rapport d'état et, lors de chaque horaire de soumission d'un rapport d'état, pilotant la sortie d'un signal audible lequel correspond aux informations d'état actuelles du terminal mobile de communication grâce à l'utilisation de l'ensemble de données vocales prédéfini.

10. Procédé de synthèse de la parole pour un terminal mobile de communication qui est capable d'afficher des objets multiples sur un écran de manière chevauchante, le procédé comprenant :
l'opération consistant à identifier la profondeur d'un objet activé sur l'écran, cas dans lequel le terme "profondeur" sert à décider lequel des objets devrait être masqué lorsque des objets se chevauchent sur l'unité d'affichage ;
l'opération consistant à rechercher un ensemble de données vocales qui concorde avec la profondeur identifiée ;
l'opération consistant à déterminer si oui ou non une instruction d'adjonction ou de suppression d'un objet a été saisie ;
l'opération consistant à fournir un signal audible qui correspond au contenu textuel de l'objet activé grâce à l'utilisation de l'ensemble de données vocales ayant été trouvé, si l'instruction d'adjonction ou de suppression d'un objet a été saisie ;
en réponse à la saisie d'une demande pour des informations d'état, fournir un signal audible qui correspond aux informations d'état actuelles du terminal mobile de communication grâce à l'utilisation d'un ensemble de données vocales prédéfini.

11. Procédé de synthèse de la parole selon la revendication 10, comprenant en outre l'opération consistant à identifier la profondeur d'un objet nouvellement activé et à rechercher un ensemble de données vocales qui concorde avec la profondeur identifiée lorsque l'objet activé est remplacé en réponse à la saisie d'une instruction d'adjonction ou de suppression d'un objet.

12. Procédé de synthèse de la parole selon la revendication 10, comprenant en outre l'opération consistant à stocker une pluralité d'ensembles de données vocales ainsi que des informations au sujet des concordances entre les profondeurs des objets et les ensembles de données vocales.

13. Procédé de synthèse de la parole selon la revendication 12, comprenant en outre l'opération consistant à créer une pluralité d'ensembles de données vocales modifiés en tonie grâce à l'application d'une modification de tonie à l'un des ensembles de données vocales stockés, et cas dans lequel les informations de stockage concernant l'étape de mise en concordance stockent des informations de concordance dans lesquelles les profondeurs d'objet sont mises en concordance avec les ensembles de données vocales modifiés en tonie suivant une manière univoque.

14. Procédé de synthèse de la parole selon la revendication 12, les informations de stockage concernant l'étape de mise en concordance stockant des informations de concordance dans lesquelles les profondeurs d'objet sont mises en concordance avec les ensembles de données vocales stockés suivant une manière univoque.

15. Procédé de synthèse de la parole selon la revendication 10, l'opération consistant à identifier une étape de profondeur comprenant l'obtention d'informations au sujet de l'objet attaché, ainsi que l'identification des profondeurs de l'objet activé et de l'objet attaché lorsque l'objet activé inclut un objet attaché, et cas dans lequel l'opération consistant à rechercher une étape de l'ensemble de données vocales comprenant des ensembles de données vocales qui sont mis en concordance avec des profondeurs identifiées d'objets activés et attachés, et à fournir des signaux audibles qui correspondent à des contenus textuels des objets activés et attachés grâce à l'utilisation d'ensembles de données vocales correspondants ayant été mis en concordance.

16. Procédé de synthèse de la parole selon la revendication 10, les informations d'état étant liées à l'un au moins des éléments suivants, à savoir : l'heure actuelle, l'intensité du signal reçu, l'énergie de batterie restante et la réception de messages.

17. Procédé de synthèse de la parole selon la revendication 10, la fourniture d'un signal audible qui correspond à l'étape d'informations d'état actuelles comprenant la vérification à intervalles réguliers des horaires préréglés de soumission d'un rapport d'état ainsi que la fourniture d'un signal audible lequel correspond aux informations d'état actuelles du terminal mobile de communication grâce à l'utilisation de l'ensemble de données vocales prédéfini lors de chaque horaire de soumission d'un rapport d'état.
